Europäisches Patentamt

European Patent Office

Office européen des brevets

(19)

(11) Veröffentlichungsnummer: **0 059 773**
**B1**

# (12) EUROPÄISCHE PATENTSCHRIFT

(45) Veröffentlichungstag der Patentschrift:
01.02.84

(21) Anmeldenummer: **81101720.1**

(22) Anmeldetag: **09.03.81**

(51) Int. Cl.³. **H 04 N 5/06**, G 01 R 29/18,
H 03 D 13/00

(54) Digitalschaltung zur Abgabe eines Binärsignals beim Auftreten eines fest vorgegebenen Frequenzverhältnisses zweier Signale und deren Verwendung in Farbfernsehempfängern.

(43) Veröffentlichungstag der Anmeldung.
15.09.82 Patentblatt 82/37

(45) Bekanntmachung des Hinweises auf die Patenterteilung:
01.02.84 Patentblatt 84/5

(84) Benannte Vertragsstaaten:
DE FR GB IT NL

(56) Entgegenhaltungen:
DD - A - 111 135
DE - A - 2 403 892
DE - A - 2 725 863
DE - B - 2 657 940
FR - A - 2 162 602
GB - A - 1 549 678
GB - A - 2 039 437

(73) Patentinhaber: **Deutsche ITT Industries GmbH,
Hans-Bunte-Strasse 19 Postfach 840, D-7800 Freiburg
(DE)**

(84) Benannte Vertragsstaaten: **DE**

(73) Patentinhaber: **ITT INDUSTRIES INC., 320 Park Avenue,
New York, NY 10022 (US)**

(84) Benannte Vertragsstaaten· **FR GB IT NL**

(72) Erfinder: **Elmis, Herbert, Berlinerstrasse 86,
D-7809 Denzlingen (DE)**
Erfinder: **Klar, Adrian, Im Gaertle 7, D-7800 Freiburg (DE)**

(74) Vertreter: **Stutzer, Gerhard, Dr., Deutsche ITT Industries
GmbH Patent- und Lizenzabteilung
Hans-Bunte-Strasse 19 Postfach 840, D-7800 Freiburg
(DE)**

Digitalschaltung zur Abgabe eines Binärsignals beim Auftreten eines fest vorgegebenen
Frequenzverhältnisses zweier Signale und deren Verwendung in Farbfernsehempfängern

Die Erfindung betrifft eine Digitalschaltung zur Abgabe eines Binärsignals beim Auftreten eines fest vorgegebenen Frequenzverhältnisses $v = f1/f2$ zweier Signale F1, F2 während einer wählbaren Meßzeit. Eine derartige Digitalschaltung wird beispielsweise in Farbfernsehempfängern dann benötigt, wenn das bei der PAL- bzw. NTSC-Norm senderseitig fest vorgegebene Frequenzverhältnis zwischen der Farbträgerfrequenz und der Zeilenfrequenz zu ermitteln ist. Dieses »Erkennungs«-Signal kann dazu dienen, den Zeilenablenkgenerator während eines gesendeten Farbprogramms an den als phasenverriegelte Schleife ausgebildeten Farbhilfsträgeroszillator über einen Frequenzteiler konstanter Teilungszahl anzukoppeln, um die wesentlich bessere Störbefreiung der mit einem Quarzoszillator ausgerüsteten phasenverriegelten Schleife ausnutzen zu können.

Dabei muß jedoch für den Fall der nicht normgerechten Verkopplung zwischen Farbträgerfrequenz und Zeilenablenkfrequenz die Möglichkeit bestehen, wie bei den bisher üblichen Schaltungen den Zeilenablenkgenerator mittels der aus dem gesendeten Farb-Bild-Austast-Synchron-Signalgemisch abgetrennten Horizontalsynchronimpulse zu synchronisieren. Diese Möglichkeit ist besonders wichtig, da auch unter üblichen Sendebedingungen mit einem senderseitigen Umschalten zwischen Verkopplung und Nichtverkopplung der beiden Signale oder mit zeilen- und bildfrequenten Phasensprüngen zu rechnen ist. Damit ein ständiges Umschalten zwischen den beiden geschilderten Synchronisierarten des Zeilenablenkgenerators vermieden wird, muß die Digitalschaltung auch übliche Fernsehsignale, bei denen das Frequenzverhältnis nur in der Nähe des fest vorgegebenen Frequenzverhältnisses liegt, noch sicher als solche mit keiner normgerechten Verkopplung erkennen können, d. h. die Digitalschaltung muß einen hohen Genauigkeitsgrad aufweisen.

Obwohl die Problemstellung der Erfindung eben anhand einer bei Farbfernsehempfängern auftretenden Problematik erläutert wurde, ist die Anwendung der Erfindung nicht auf diesen speziellen Fall beschränkt; er stellt vielmehr lediglich eine bevorzugte Verwendung der Erfindung dar.

Die Aufgabe der in den Ansprüchen gekennzeichneten Erfindung besteht darin, eine allgemein verwendbare Digitalschaltung zur Abgabe eines Binärsignals beim Auftreten eines fest vorgegebenen Frequenzverhältnisses zweier Signale während einer wählbaren Meßzeit anzugeben. Dabei soll als Ausgangssignal ein Binärsignal abgegeben werden, dessen einer Zustand das Vorhandensein des fest vorgegebenen Frequenzverhältnisses und desse anderer Zustand das Nichtvorhandensein des Frequenzverhältnisses anzeigt.

Die Vorteile der Erfindung bestehen unter anderem darin, daß sie ausschließlich mit Mitteln der Digitalschaltungstechnik realisiert ist und sich somit für eine monolithische Integrierung bestens eignet. Dabei ist insbeondere an eine Integrierung in Isolierschicht-Feldeffekttransistor-Technik, also in der sogenannten MOS-Technik, zu denken.

Die Erfindung wird nun anhand der Figuren der Zeichnung näher erläutert.

Fig. 1 zeigt blockschaltbildmäßig ein Ausführungsbeispiel der Erfindung und

Fig. 2 zeigt ebenfalls blockschaltbildmäßig eine vorteilhafte Weiterbildung des Ausführungsbeispiels nach Fig. 1.

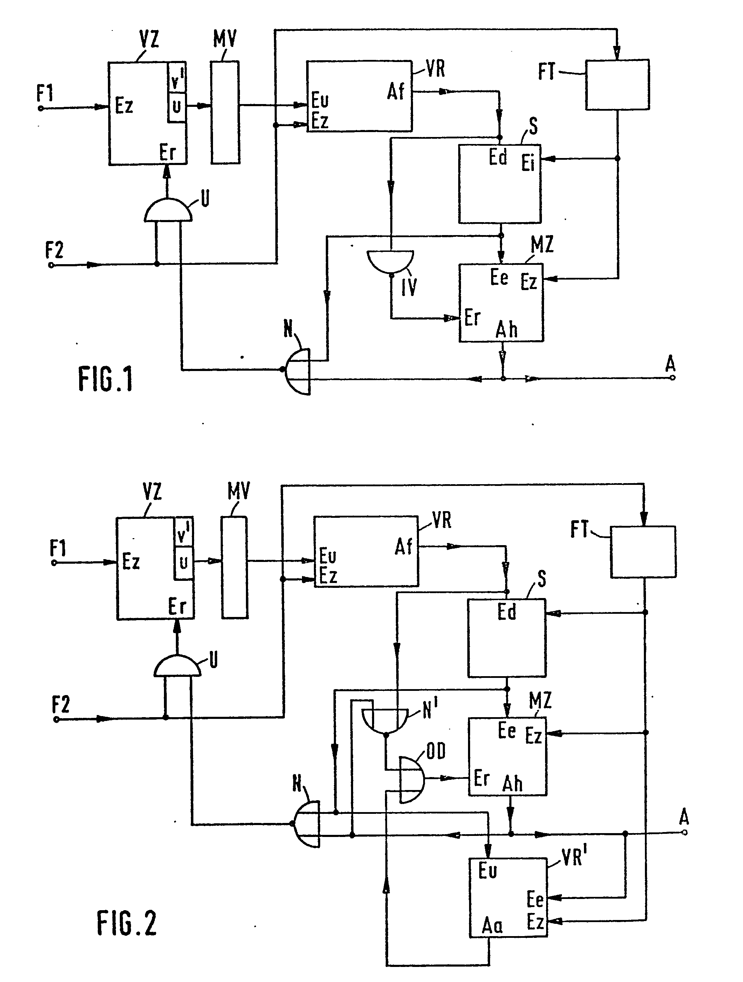

Im Ausführungsbeispiel, dessen Blockschaltbild in Fig. 1 gezeigt ist, ist das erste Signal F1, dessen Frequenz f1 größer ist als die Frequenz f2 des zweiten Signals F2, dem Zähleingang Ez des Vorwärtszählers VZ zugeführt. Da im Anfangszustand der Digitalschaltung am Ausgang des zweiten NOR-Gatters N bei der für die Funktionsweise vorausgesetzten positiven Logik der positivere Pegel H zweier Binärsignalpegel liegt, wird der Vorwärtszähler VZ bei jedem Impuls des zweiten Signals F2 zurückgesetzt; sein Rücksetzeingang. Er liegt nämlich am Ausgang des UND-Gatters U.

Die Zählkapazität z des Vorwärtszählers VZ ıst größer als das Frequenzverhältnis $v = f1/f2$ gewählt; der diesem Frequenzverhältnis entsprechende Zählerstand ist mit v' bezeichnet. Der Ausgang eines in der Nähe vor dem Zählerstand v' liegenden Zählerstandes u liegt am Triggereingang des monostabilen Multivibrators MV. Somit wird dieser bei jedem Zählerdurchlauf einmal getriggert, da das erwähnte Rücksetzen des Vorwärtszählers VZ erst bei Erreichen des Zählerstandes v' erfolgt.

Die Kippzeit k des monostabilen Multivibrators MV ist gleich der doppelten Zeitdauer, die der Vorwärtszähler VZ für das Zählen vom Zählerstand u bis zum Zählerstand v' benötigt. Sein Ausgangssignal liegt am Vorwärts/Rückwärts-Umschalteingang Eu des Vorwärts/Rückwärts-Zählers VR, dessen Zähleingang Ez das zweite Signal F2 zugeführt ist und der mit einer Verriegelung des Nullzustandes und des Höchstzählerstandes versehen ist. Ein H-Pegel am Umschalteingang Eu bewirkt dabei eine Vorwärtszählung und entsprechend der negativere Pegel L der beiden Binärsignalpegel eine Zählung in Rückwärtsrichtung. Mit dem Vorwärts/Rückwärts-Zähler VR wird die Koinzidenz zwischen dem Ausgangssignal des monostabilen Multivibrators MV und dem zweiten Signal F2 festgestellt, d. h. ob diese beiden Signale in Phase sind. Durch das Vorwärts- bzw. Rückwärtszählen und das Abgreifen eines Ausgangssignals an einen bestimmten Zählerstand wird ermittelt, ob die mittlere Phasenlage zwischen dem Ausgangssignal des monostabilen Multivibrators MV und dem zweiten Signal F2 dem Sollwert entspricht. Dieser Zählerstandausgang Af entspricht etwa einem Fünftel des Höchstzählerstandes des Vorwärts/Rückwärts-Zählers VR. Die erwähnte mittlere Phasenlage entspricht dem Sollwert, wenn der Zählerstand Af überschritten wird und am entsprechenden Ausgang dann dauernd ein H-Pegel auftritt.

Der Zählerstandausgang Af des Vorwärts/ Rückwärts-Zählers VR liegt am Dateneingang Ed des Speichers S mit dem Impulseingang Ei, der einen während der Dauer des ihm zugeführten Ausgangsimpulses des Frequenzteilers FT am Zählerstandausgang Af auftretenden L-Pegel einschreibt und am Ende des Ausgangsimpulses des Frequenzteilers FT den L-Pegel ausliest und danach löscht; ein während dessen Dauer dauernd anliegender H-Pegel wird ebenfalls an dessen Ende ausgelesen und danach gelöscht. Dem Eingang des Frequenzteilers FT ist das zweite Signal F2 zugeführt, und seine Teilungszahl liegt in der Größenordnung von 100. Bei der erwähnten bevorzugten Verwendung in Farbfernsehempfängern kann dieser Frequenzteiler FT entfallen und dem Impulseingang Ei des Speichers S sind entsprechende vertikalsynchrone Impulse zuzuführen.

Mit dem Speicher S wird somit für jeden Frequenzteilerdurchlauf ein während dieses Durchlaufs auftretender L-Pegel des Ausgangssignals am Zählerstandausgang Af des Vorwärts/Rückwärts-Zählers VR bzw. ein daran dauernd auftretender H-Pegel gespeichert und es wird somit festgestellt, ob während des vorangegangenen Frequenzteilerdurchlaufs die mittlere Phasenlage dem Sollwert entsprochen hat oder nicht. Im Falle der bevorzugten Verwendung in Farbfernsehempfängern wird also ermittelt, ob in der vorangegangenen Halbbildperiode die mittlere Phasenlage zwischen dem Ausgangssignal des monostabilen Multivibrators MV und dem zweiten Signal F2, das in diesem Fall zeilenfrequent ist, dem Sollwert entsprochen hat oder nicht.

Der Zähleingang Ez des die Meßzeit bestimmenden Zählers MZ, der mit einer Verriegelung des Höchstzählerstandes versehen ist, liegt am Ausgang des Frequenzteilers FT und sein Enable-Eingang Ee am Ausgang des Speichers S, während sein Höchstzählerstandausgang Ah der Ausgang A der Digitalschaltung ist. Der Zählerstandausgang Af des Vorwärts/Rückwärts-Zählers VR liegt über den Inverter IV am Reset-Eingang Er des Zählers MZ. Dieser zählt somit alle Frequenzteilerumläufe, bzw. Halbbildperioden, in denen die erwähnte Koinzidenz vorlag. Erreicht der Zähler MZ, ohne vorher über seinen Reset-Eingang Er zurückgesetzt zu werden, den Höchstzählerstand, so tritt der H-Pegel am Ausgang A auf, d. h. damit sind das Ausgangssignal des monostabilen Multivibrators MV und das zweite Signal F2 während eines Zählerumlaufs des Zählers MZ in Phase geblieben. Die erwähnte Rücksetzung über den Reset-Eingang Er erfolgt über den Inverter IV, wenn während eines Frequenzteilerumlaufs Nichtkoinzidenz vorlag.

Bei Farbfernsehempfängern liegt die Zählkapazität des Zählers MZ in der Größenordnung von 1000, d. h. wenn z. B. während 1000 Halbbildperioden die erwähnte Koinzidenz auftrat, erscheint am Ausgang A ein H-Pegel.

Dieser H-Pegel bewirkt ebenso wie schon ein H-Pegel am Ausgang des Speichers S über das NOR-Gatter N, dessen erstem Eingang das Ausgangssignal des Speichers S zugeführt ist und dessen zweiter Eingang am Ausgang Ah des Zählers MZ liegt, ferner, daß der im erwähnten Anfangszustand der Digitalschaltung am einen Eingang des UND-Gatters U auftretende H-Pegel zu einem L-Pegel wird und somit das eingangs erwähnte Zurücksetzen des Vorwärts-Zählers VZ durch das zweite Signal F2 unterbleibt.

In Fig. 2 ist eine Weiterbildung der Anordnung nach Fig. 1 gezeigt, mit der die Störbefreiung verbessert werden kann. Durch den weiteren Vorwärts/Rückwärts-Zählers VR', dessen Vorwärts/Rückwärts-Umschalteingang Eu am Ausgang des Speichers S liegt, wobei ein H-Pegel eine Rückwärtszählung und entsprechend ein L-Pegel eine Vorwärtszählung bewirkt, und durch das ODER-Gatter OD wird der H-Pegel am Ausgang Ah des Zählers MZ nicht schon bei jeder Nichtkoinzidenz zu einem L-Pegel, sondern vielmehr erst nach Erreichen des Zählerstandes des Ausgangs Aa des weiteren Vorwärts/Rückwärts-Zählers VR', an dem der eine Eingang des ODER-Gatters OD liegt. Sein anderer Eingang ist mit dem Ausgang des weiteren NOR-Gatters N' verbunden, das den Inverter IV nach Fig. 1 ersetzt und dessen erster Eingang am Zählerstandausgang Af liegt. Sein zweiter Eingang liegt am Ausgang A der Digitalschaltung, sein Ausgang am Reset-Eingang Er des Zählers MZ. Dem Zähleingang Ez des weiteren Vorwärts/ Rückwärts-Zählers VR' sind die Ausgangsimpulse des Frequenzteilers FT zugeführt, während sein Enable-Eingang Ee am Ausgang A der Digitalschaltung liegt. Bei Farbfernsehempfängern ist es ausreichend, wenn wenige Halbbildperioden mittels des weiteren Vorwärts/Rückwärts-Zählers VR', z. B. vier solcher Perioden, gezählt werden.

Bei Verwendung der Erfindung in PAL-Farbfernsehempfängern ist es erforderlich, die Digitalschaltung an das unganzzahlige Frequenzverhältnis zwischen der vierfachen Farbträgerfrequenz 17,7 ... MHz und der Zeilenfrequenz 15,625 ... kHz dadurch anzupassen, daß der Frequenzverhältnis-Zählerstand v' des vorwärtszählers VZ für einen einzigen Zählerdurchlauf pro Halbperiode auf 1137, für die übrigen Zählerdurchläufe in jeder Halbbildperiode auf 1135 eingestellt ist. Diese Umschaltung ist bei NTSC-Farbfernsehempfängern nicht erforderlich, da dort das Farbträgerfrequenz-Zeilenfrequenz-Frequenzverhältnis ganzzahlig ist.

**Patentansprüche**

1. Digitalschaltung zur Abgabe eines Binärsignals beim Auftreten eines fest vorgegebenen Frequenzverhältnisses (v = f1/f2) zweier Signale (F1, F2) während einer wählbaren Meßzeit, gekennzeichnet durch folgende Merkmale:

— das höherfrequente erste Signal (F1) liegt am Zähleingang (Ez) eines Vorwärtszählers (VZ), dessen Zählkapazität (z) größer ist als das Frequenzverhältnis (v),
— der Ausgang eines in der Nähe vor dem Frequenzverhältnis-Zählerstand (v') liegenden Zählerstandes (u) liegt am Trigger-Eingang eines monostabilen Multivibrators (MV), dessen Kippzeit (k) gleich der doppelten Zeitdauer ist, die der Vorwärtszähler (VZ) für das Zählen vom Zählerstand (u) bis zum Frequenzverhältnis-Zählerstand (v') benötigt (k = 2(v' − u)/f1),
— der Ausgang des monostabilen Multivibrators (MV) liegt am Vorwärts/Rückwärts-Umschalteingang (Eu) eines Vorwärts/Rückwärts-Zählers (VR), dessen Zähleingang (Ez) das zweite Signal (F2) zugeführt ist und der mit einer Verriegelung des Nullzustandes und des Höchstzählerstandes versehen ist,
— einem Frequenzteiler (FT) ist das zweite Signal (F2) eingangsseitig zugeführt,
— ein Zählerstandausgang (Af) des Vorwärts/Rückwärts-Zählers (VR), der etwa einem Fünftel des Höchstzählerstandes entspricht, ist mit dem Dateneingang (Ed) eines Speichers (S) mit Impulseingang (Ei) verbunden, der einen während der Dauer des ihm zugeführten Ausgangsimpulses des Frequenzteilers (FT) am Zählerstandausgang (Af) auftretenden L-Pegel einschreibt und am Ende des Ausgangsimpulses des Frequenzteilers (FT) den L-Pegel ausliest und dadurch löscht,
— der Zähleingang (Ez) eines die Meßzeit bestimmenden Zählers (MZ), der mit einer Verriegelung des Höchstzählerstandes versehen ist, liegt am Ausgang des Frequenzteilers (FT) und sein Enable-Eingang (Ee) am Ausgang des Speichers (S), während sein Höchstzählerstand-Ausgang (Ah) der Ausgang (A) der Digitalschaltung ist,
— der Zählerstandausgang (Af) des Vorwärts/Rückwärts-Zählers (VR) liegt über einen Inverter (IV) am Reset-Eingang (Er) des Zählers (MZ),
— der Ausgang des Speichers (S) liegt am ersten Eingang eines NOR-Gatters (N), dessen zweiter Eingang mit dem Ausgang (A) der Digitalschaltung verbunden ist, und
— der Ausgang des NOR-Gatters (N) liegt am ersten Eingang eines UND-Gatters (U), dessen zweitem Eingang das zweite Signal (F2) zugeführt ist und dessen Ausgang mit dem Reset-Eingang (Er) des Vorwärtszählers (VZ) verbunden ist.

2. Digitalschaltung nach Anspruch 1, gekennzeichnet durch folgende Merkmale:

— es ist ein weiterer Vorwärts/Rückwärts-Zähler (VR') vorgesehen wobei sein Zähleingang (Ez) am Ausgang des Frequenzteilers (FT), sein Enable-Eingang (Ee) am Ausgang (A) der Digitalschaltung und sein Vorwärts/Rückwärts-Umschalt-Eingang (Eu) am Ausgang des Speichers (S) liegt,
— der Reset-Eingang (Er) des Zählers (MZ) liegt über die erste Eingangs-Ausgangs-Strecke eines ODER-Gatters (OD) am Ausgang eines mit seiner ersten Eingangs-Ausgangs-Strecke den Inverter (IV) ersetzenden, weiteren NOR-Gatters (N'), dessen zweiter Eingang am Ausgang (A) der Digitalschaltung liegt, und
— der zweite Eingang des ODER-Gatters (OD) liegt am Ausgang (Aa) des weiteren Vorwärts/Rückwärts-Zählers (VR').

3. Verwendung der Digitalschaltung nach Anspruch 1 oder 2, in Farbfernsehempfängern zur Feststellung des im empfangenen Signal festen Frequenzverhältnisses von Farbträgerfrequenz und Zeilenfrequenz.

4. Digitalschaltung zur Verwendung nach Anspruch 3 in PAL-Farbfernsehempfängern, dadurch gekennzeichnet, daß die Digitalschaltung an das genaue Frequenzverhältnis zwischen der vierfachen Farbträgerfrequenz (17,7 MHz) und Zeilenfrequenz (15,625 kHz) dadurch angepaßt ist, daß der Frequenzverhältnis-Zählerstand (v') des Vorwärtszählers (VZ) für einen einzigen Zählerdurchlauf pro Halbperiode 1137, für die übrigen Zählerdurchläufe jeder Halbbildperiode jedoch 1135 ist.

5. Digitalschaltung nach Anspruch 4, dadurch gekennzeichnet, daß der Frequenzteiler (FT) entfällt und dem Impulseingang (Ei) des Speichers (S) entsprechende vertikalsynchrone Impulse zugeführt sind.

**Claims**

1. Digital circuit for providing a binary signal on the occurrence of a predetermined frequency ratio (v = f1/f2) of two signals (F1, F2) during a suitable measuring period, characterized by the following features:

— The higher-frequency, first signal (F1) is applied to the count input (Ez) of an up-counter (VZ) whose capacity (z) ist greater than the frequency ratio (v);
— the output for a count (u) lying close before the frequency-ratio count (v') is coupled to the trigger input of a monostable multivibrator (MV) whose dwell time (k) is equal to twice the period required by the up-counter (VZ) to count from the first-mentioned count (u) to the frequencyratio count (v') (k = 2(v' − u)/f1);

- the output of the monostable multivibrator (MV) is connected to the up-down control input (Eu) of an up-down counter (VR) whose count input (Ez) is fed with the second signal (F2) and whose zero state and maximum count are locked up;
- the frequency divider (FT) is fed with the second signal (F2);
- a count output (Af) of the up-down counter (VR) which corresponds to about one fifth of the maximum count is connected to the data input (Ed) of a memory (S) having a control input (Ei) which causes an L level appearing at the count output (Af) to be written into the memory (S) during application of an output pulse from the frequency divider (FT) and to be read at the end of the output pulse from the frequency divider (FT) and then erased;
- the count input (Ez) of a measuring-period-determining counter (MZ) whose maximum count is locked up is connected to the output of the frequency divider (FT), and its enable input (Ee) is connected to the output of the memory (S), while its maximumcount output (Ah) is the output (A) of the digital circuit;
- the count output (Af) of the up-down counter (VR) is connected to the reset input (Er) of the counter (MZ) via an inverter (IV);
- the output of the memory (S) is connected to the first input of a NOR gate (N) having its second input connected to the output (A) of the digital circuit, and
- the output of the NOR gate (N) is coupled to the first input of an AND gate (U) whose second input is fed with the second signal (F2) and whose output is coupled to the reset input (Er) of the upcounter (VZ).

2. A digital circuit as claimed in claim 1, characterized by the following features:

- An additional up-down counter (VR') is provided whose count input (Ez) is connected to the output of the frequency divider (FT) and whose enable input (Ee) is connected to the output (A) of the digital circuit, while its up-down control input (Eu) is connected to the output of the memory (S);
- the reset input (Er) of the counter (MZ) is connected via the first input-output path of an OR gate (OD) to the output of an additional NOR gate (N') whose first input-output path replaces the inverter (IV) and which has its second input connected to the output (A) of the digital circuit, and
- the second input of the OR gate (OD) is connected to the output (Aa) of the additional up-down counter (VR').

3. Use of the digital circuit claimed in claim 1 or 2 in color-television receivers to sense the fixed ratio between chrominance-subcarrier frequency and horizontal frequency in the received signal.

4. Digital circuit for use in PAL color-television receivers in accordance with claim 3, characterized in that it is adapted to the precise ratio between the four-fold chrominance-subcarrier frequency (17.7 MHz) and the horizontal frequency (15.625 kHz) by arranging that the frequency-ratio count (v') of the up-counter (VZ) is 1,137 for a single count cycle per field period but 1,135 for the remaining count cycles of each field period.

5. A digital circuit as claimed in claim 4, characterized in that the frequency divider (FT) is omitted, and that pulses synchronous with the vertical deflection are applied to the control input (Ei) of the memory (S).

**Revendications**

1. Circuit numérique pour fournir un signal binaire lorsque se produit un rapport de fréquences prédéterminé (v = f1/f2) entre deux signaux (F1, F2), durant une période de mesure appropriée, caractérisé en ce que:

- le premier signal (F1), ayant la fréquence la plus élevée, est appliqué à l'entrée de comptage (Ez) d'un compteur ascendant (VZ) dont la capacité de comptage (Z) est plus grande que le rapport de fréquences (v);
- la sortie d'une valeur de comptage (u) située peu avant le compte de rapport de fréquences (v') est couplée à l'entrée de déclenchement d'un multivibrateur monostable (MV) dont le temps de maintien (k) est double de la durée demandée par le compteur ascendant (VZ) pour compter depuis la première valeur de comptage mentionnée (u) jusqu'au compte de rapport de fréquences (v'), de sorte que k = 2(v'−u)/f1;
- la sortie du multivibrateur monostable (MV) est connectée à l'entrée de commande de comptage/décomptage (Eu) d'un compteur réversible (VR) dont l'entrée de comptage (Ez) est alimentée par le second signal (F2) et dont les états de comptage nul et de comptage maximal sont verrouillés;
- un diviseur de fréquence (FT) est alimenté par le second signal de fréquence (F2);
- une sortie d'une valeur de comptage (Af) du compteur résersible (VR) qui correspond à environ un cinquième de la valeur maximale de comptage est connectée à l'entrée de données (Ed) d'une mémoire (S) ayant une entrée de commande (Ei) arrangée de sorte qu'un niveau L à la sortie de comptage (Af) soit inscrit dans la mémoire (S) durant l'application d'une impulsion de sortie venant du diviseur de fréquence (FT) et soit lu à la fin de l'impulsion de sortie du diviseur de fréquence (FT) pour être ensuite effacé;
- l'entrée de comptage (Ez) d'un compteur de période de mesure (MZ), dont l'état de comptage maximal est verrouillé, est connectée à la sortie du diviseur de fréquence (FT) et son entrée de validation (Ee) est connectée à la sortie de la mémoire (S), tandis que sa sortie de comptage maximal (Ah) fournit le signal de sortie (A) du circuit numérique;

— la sortie de comptage (Af) du compteur réversible (VR) est connectée à l'entrée de réinitialisation (Er) du compteur (MZ) via un inverseur (IV);

— la sortie de la mémoire S est connectée à la première entrée d'une porte OU-NON (N) dont la seconde entrée est connectée à la sortie (A) du circuit numérique; et

— la sortie de la porte OU-NON (N) est couplée à la première entrée d'une porte ET (U) dont la seconde entrée est alimente par le second signal (F2) et dont la sortie est couplée à l'entrée de réinitialisation (Er) du compteur réversible (VZ).

2. Circuit numérique tel que défini dans la revendication 1, caractérisé en ce que:

— un compteur réversible additionnel (VR') est prévu, dont une entrée de comptage (Ez) est connectée à la sortie du diviseur de fréquence (FT), dont l'entrée de validation (Ee) est connectée à la sortie du circuit numérique et dont l'entrée de commande de comptage/décomptage est connectée à la sortie de la mémoire (S);

— l'entrée de réinitialisation (Er) du compteur (MZ) est connectée, via le trajet première entrée-sortie d'une porte OU (OD) à la sortie d'une porte OU-NON additionnelle (N') dont le trajet première entrée-sortie remplace l'inverseur (IV) et dont la seconde entrée est connectée à la sortie (A) du circuit numérique; et

— la seconde entrée de la porte OU (OD) est connectée à la sortie (Aa) du compteur réversible additionnel (VR').

3. Application d'un circuit numérique tel que défini dans la revendication 1 ou la revendication 2 dans les récepteurs de télévision en couleurs, afin de reconnaître le rapport fixe entre la fréquence de la sous-porteuse de chrominance et la fréquence de balayage ligne dans le signal reçu.

4. Circuit numérique pour récepteurs de télévision en couleurs en système PAL selon la revendication 3, caractérisé en ce qu'il est adapté au rapport précis entre quatre fois la fréquence de la sous-porteuse de chrominance (17,7 MHz) et la fréquence de balayage ligne (15,625 kHz) en prévoyant que le comptage de rapport de fréquence (v') du compteur ascendant (VZ) est 1137 pour un cycle de comptage de chaque période de trame et de 1135 pour les autres cycles de comptage de la période de trame.

5. Circuit numérique tel que défini en 4, caractérisé en ce que le diviseur de fréquence (FT) est omis, des impulsions synchronisées avec la déffection verticale étant appliquée à l'entrée de commande (Ei) de la mémoire (S).

0 059 773

FIG.1

FIG.2